(19) Europäisches Patentamt
European Patent Office
Office européen des brevets

(11) **EP 0 603 493 B1**

(12) **EUROPÄISCHE PATENTSCHRIFT**

(45) Veröffentlichungstag und Bekanntmachung des Hinweises auf die Patenterteilung:
**26.03.1997 Patentblatt 1997/13**

(51) Int. Cl.[6]: **B60T 7/20**, B60T 13/66, B60T 8/24, B60T 8/00

(21) Anmeldenummer: 93117205.0

(22) Anmeldetag: **23.10.1993**

(54) **Verfahren zur Abbremsung eines Fahrzeugzuges**

Method of braking an articulated vehicle

Procédé de freinage d'un train routier

(84) Benannte Vertragsstaaten:
**DE FR GB IT NL SE**

(30) Priorität: **19.12.1992 DE 4243245**

(43) Veröffentlichungstag der Anmeldung:
**29.06.1994 Patentblatt 1994/26**

(73) Patentinhaber: **WABCO Standard GmbH**
**D-53121 Bonn (DE)**

(72) Erfinder:
• **Frank, Dieter**
**D-30171 Hannover (DE)**

• **Stender, Axel**
**D-31787 Hameln (DE)**
• **Schappler, Hartmut**
**D-30455 Hannover (DE)**
• **Witte, Norbert**
**D-31515 Wunstorf (DE)**

(74) Vertreter: **Schrödter, Manfred, Dipl.-Ing.**
**WABCO Standard GmbH**
**Postfach 91 12 80**
**30432 Hannover (DE)**

(56) Entgegenhaltungen:
**EP-A- 0 374 484          DE-A- 4 003 316**
**DE-C- 4 035 805**

**Beschreibung**

Die Erfindung betrifft Verfahren zur Abbremsung eines aus wenigstens zwei Einzelfahrzeugen bestehendes Fahrzeugzuges gemäß den Oberbegriffen der Patentansprüche 1 und 2 sowie Fahrzeugzüge zur Durchführung der Verfahren gemäß den Oberbegriffen der Patentansprüche 8 und 9.

Unter "Achsgruppe" sollen vorliegend sowohl eine Einzelachse als auch Mehrachsaggregate verstanden werden.

In einem Fahrzeugzug der in den Oberbegriffen genannten Art übernimmt das stützende Einzelfahrzeug im Stillstand und bei stationärer Fahrt, d. h. bei Fahrt mit gleichmäßiger Geschwindigkeit, einen Teil des Gewichts des gestützten Einzelfahrzeuges und bei instationärer Fahrt, d. h. beim Beschleunigen und Abbremsen, zusätzlich einen Teil der auf das gestützte Fahrzeug ausgeübten Beschleunigungs- bzw. Bremskraft.

Die Richtungsstabilität eines solchen Fahrzeugzuges ist beim Abbremsen gefährdet, wenn das gestützte Fahrzeug zu stark aufschiebt, weil seine Bremse bzw. seine Bremsen eine zu geringe Bremskraft erzeugen. In diesem Fall kann es zu einem Einknicken des Fahrzeugzuges (Jackknifing) kommen, mit der Folge erheblicher Gefährdung des Fahrzeugzuges selbst und des umgebenden Verkehrs.

Ein aus der DE-C-40 35 805 bekanntes Verfahren sieht vor, in einem Betriebspunkt, in dem bei niedrigem Niveau der den Bremsen zugeführten Energie die zwischen den Einzelfahrzeugen wirkende Kraft einen Sollwert angenommen hat, die Zuordnung der Energien der Einzelfahrzeuge zu bestimmen und, von dieser Zuordnung ausgehend, in Betriebspunkten mit hohem Energieniveau eine an bestimmte Fahrzeugparameter angepaßte Zuordnung einzuhalten. Das bekannte Verfahren bietet damit die Möglichkeit eines angenähert stabilitätsoptimierten Abbremsens des Fahrzeugzuges.

Verfahren der eingangs genannten Art sind aus der EP-A-0 374 484 bekannt. Diese bieten im Vergleich zu dem aus der DE-C-40 35 805 bekannten Verfahren den Vorteil, daß sie in allen Betriebspunkten ein genau stabilitätsoptimiertes Abbremsen des Fahrzeugzuges sicherstellen.

Der vorliegenden Erfindung liegt die Aufgabe zugrunde, Lösungen für eine einfache Durchführung der eingangs genannten Verfahren mit einer erhöhten Meßgenauigkeit der verwendeten Kraftmeßeinrichtung vorzuschlagen.

Diese Aufgabe wird durch die in den Patentansprüchen 1, 2, 8 und 9 angegebene Erfindung gelöst. Vorteilhafte Fortbildungen und Fahrzeugzüge zur Durchführung der Erfindung sind in den Unteransprüchen angegeben.

Die Erfindung geht von der Erkenntnis aus, daß ein Fahrzeugzug mit optimaler Richtungsstabilität, kurz stabilitätsoptimiert, abgebremst wird, wenn an allen gebremsten Rädern der Quotient aus der Bremskraft auf der Fahrbahnoberfläche und dem auf das jeweilige Rad entfallenden Achslastanteil gleich ist. Dieser Quotient wird üblicherweise Kraftschlußausnutzung (adhesion utilization) µ genannt.

Im Sinne der Erfindung ist eine Bremse der jeweilige Bestandteil einer Bremsanlage, der unmittelbar die Bremskraft erzeugt. Im Falle einer nicht verschleißfreien Bremse ist dies eine Baugruppe, die aus der Radbremse, der Zuspanneinrichtung und etwaigen dazwischen angeordneten Übertragungsgliedern besteht.

Die Erfindung ist für jede Art Energie geeignet. Beispielhaft seien Druck einschließlich der Druckdifferenz zwischen Umgebungsdruck und einem Unterdruck, elektrische Energie oder menschliche Kraft erwähnt. Im Falle des Drucks als Energie sind als Energieträger beispielsweise Druckluft und hydraulische Druckmittel sowie Kombinationen daraus gebräuchlich. Es ist auch üblich, für die Bremsbetätigung und die Betätigungssteuerung unterschiedliche Energiearten einzusetzen, beispielsweise Druck als Betätigungsenergie und elektrische Energie als Steuerenergie. Die oben erwähnte Zuspanneinrichtung ist im Falle von Druck als Energie üblicherweise als Bremszylinder ausgebildet.

Weitere Vorteile der Erfindung werden in deren nunmehr folgender Erläuterung anhand von in Zeichnungen dargestellten Ausführungsbeispielen angegeben.

Während

Figur 1     der Erläuterung der Erfindung zugrundeliegender Zusammenhänge anhand eines Fahrzeugzuges

dient, zeigen unter durchgehender Verwendung gleicher Bezugszeichen für Elemente mit gleicher Funktion, ausgezogener Linien für (Betätigungs-)Energieleitungen, gestrichelter Linien für Steuerleitungen und strichpunktierter Linien für Signalleitungen

Figur 2     schematisch eine Bestückung des Fahrzeugzuges nach Figur 1 zur Gewährleistung stabilitätsoptimierten Abbremsens,

Figur 3     schematisch den Fahrzeugzug nach Figur 2 mit einer anderen Bestückung.

Figur 4     schematisch die Gegebenheiten einer beispielhaften Kraftmeßeinrichtung.

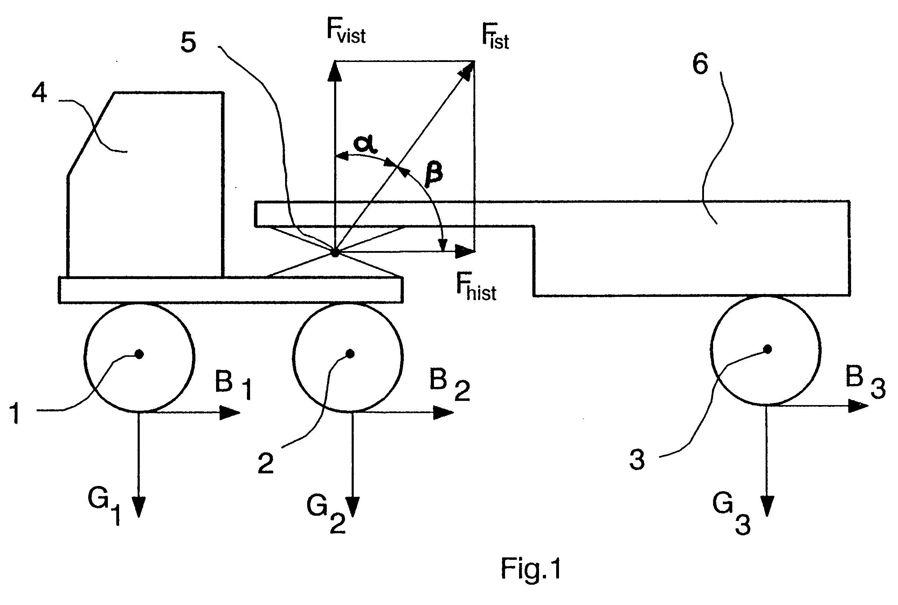

Der in Figur 1 dargestellte Fahrzeugzug besteht aus einem stützenden Einzelfahrzeug (4) und einem gestützten Einzelfahrzeug (6). Das stützende Einzelfahrzeug (4) hat zwei Achsgruppen (1 und 2), das gestützte Einzelfahrzeug (6) hat eine Achsgruppe (3), die jeweils durch ein Rad repräsentiert sind. Das gestützte Fahrzeug (6) ist über eine schematisch dargestellte Kupplung (5) mit dem stützenden Einzelfahrzeug (4) verbunden. Die Einzelfahrzeuge (4 und 6) können in bekannter Weise weitere Achsgruppen aufweisen. Für diesen Fall gelten die folgenden Ausführungen in entsprechender Anwendung mit.

Das Gewicht des gestützten Einzelfahrzeugs (6) ruft zwischen den Rädern von dessen Achsgruppe (3) und der Fahrbahn eine Achslast ($G_3$) und in der Kupplung (5) eine vertikale Ist-Komponente hervor, die gleich der eingezeichneten Kraft ($F_{vist}$), aber dieser entgegengerichtet ist. Die vertikale Ist-Komponente ($F_{vist}$) verursacht zwischen den Rädern der Achsgruppen (1 und 2) des stützenden Einzelfahrzeugs (4) und der Fahrbahn-Achslastanteile, die sich mit den Eigengewichtsanteilen des stützenden Einzelfahrzeugs (4) zu Achslasten ($G_1$ und $G_2$) summieren.

Im Stillstand und bei stationärer Fahrt des Fahrzeugzuges bestimmen sich die dann "statisch" genannten Werte der vertikalen Ist-Komponente ($F_{vist}$) und der Achslasten ($G_1$, $G_2$, $G_3$) in bekannter Weise aus bestimmten Abmessungen und den horizontalen Lagen der Schwerpunkte der Einzelfahrzeuge (4) und (6). Für den beschleunigten oder abgebremsten Fahrzeugzug bestimmen sich in bekannter Weise dann die "dynamisch" genannten Werte der genannten Größen außerdem aus der Ist-Fahrzeugzugbeschleunigung bzw. der Ist-Fahrzeugzugverzögerung (b) und den vertikalen Schwerpunktlagen.

Die Einzelfahrzeuge (4) und (6) besitzen an jeder Achsgruppe (1, 2, 3) wenigstens eine Bremse. Bei einer Bremsbetätigung übertragen die gebremsten Räder der Achsgruppen (1, 2, 3) auf die Fahrbahnoberfläche Bremskräfte, deren Reaktionskräfte achsgruppenweise mit $B_1$, $B_2$ und $B_3$ bezeichnet und unmaßstäblich dargestellt sind.

Mit den bisher eingeführten Bremskraft- bzw. Achslastsymbolen lautet die oben erwähnte Bedingung für stabilitätsoptimiertes Abbremsen

$$\mu = B_1/G_1 = B_2/G_2 = B_3/G_3 \qquad (I)$$

Mit $m_1$, $m_2$, $m_3$ als auf die jeweilige Achsgruppe (1, 2, 3) entfallender jeweiliger Fahrzeugmasse und der Erdbeschleunigung (g) ergibt sich

$$\mu = m_1 \cdot b/m_1 \cdot g = m_2 \cdot b/m_2 \cdot g = m_3 \cdot b/m_3 \cdot g = b/g \qquad (II)$$

Bei einer Bremsbetätigung entsteht in der Kupplung (5) eine Bremskraft ($F_{hist}$) auf das gestützte Einzelfahrzeug (6). Diese und die vertikale Ist-Komponente ($F_{vist}$) bilden als Resultierende die bei einer Bremsbetätigung zwischen den Einzelfahrzeugen (4) und (6) wirkende Kraft ($F_{ist}$). Diese greift unter einem Winkel ($\alpha$) zur Vertikalen und unter einem Winkel ($\beta$) zur Horizontalen an. Dargestellt sind die Kraft ($F_{ist}$) und ihre Ist-Komponenten in ihrer Wirkrichtung auf das gestützte Einzelfahrzeug (6). Den weiter unten beschriebenen Auswertungen der Kraft ($F_{ist}$) und ihrer Ist-Komponenten können aber mit gleichem Ergebnis die durch sie hervorgerufenen Reaktionskräfte auf das stützende Einzelfahrzeug (4) zugrundegelegt werden.

Die vorstehenden Erläuterungen und die zeichnerische Darstellung unterstellen, daß das stützende Einzelfahrzeug (4) dem gestützten Einzelfahrzeug (6) vorausfährt. Der Fachmann erkennt, daß diese Erläuterungen und die zeichnerische Darstellung in entsprechender Anwendung bzw. mit entsprechenden Änderungen auch gelten, wenn das stützende Einzelfahrzeug (4) dem gestützten Einzelfahrzeug (6) hinterherläuft, wie es beispielsweise im Schienenverkehr und im Rangierbetrieb von Straßen-Fahrzeugzügen üblich ist.

Typische Beispiele für Fahrzeugzüge der dargestellten Art sind Sattelzüge, Deichselzüge mit aufgestützter starrer Deichsel und Gelenkbusse. Das stützende Fahrzeug ist normalerweise in einem Sattelzug eine Zugmaschine und in einem Deichselzug sowie einem Gelenkbus ein Motorfahrzeug mit eigenem Nutzlast- bzw. Personenaufbau. Das gestützte Einzelfahrzeug ist normalerweise in einem Sattelzug der Sattelanhänger, in einem Deichselzug ein Einachs- bzw. ein als solcher anzusehender Mehrachsanhänger und in einem Gelenkbus ein aufgestützter Nachläufer. Es sind aber auch Fahrzeugzüge mit mehr als zwei Einzelfahrzeugen bekannt, in denen sowohl das stützende als auch das gestützte Einzelfahrzeug der Kategorie "Anhänger" angehören. Es sei noch erwähnt, daß in einem Deichselzug und in einem Gelenkbus die Kupplung normalerweise, anders als dargestellt, hinter der letzten Achsgruppe des stützenden Einzelfahrzeugs angeordnet ist.

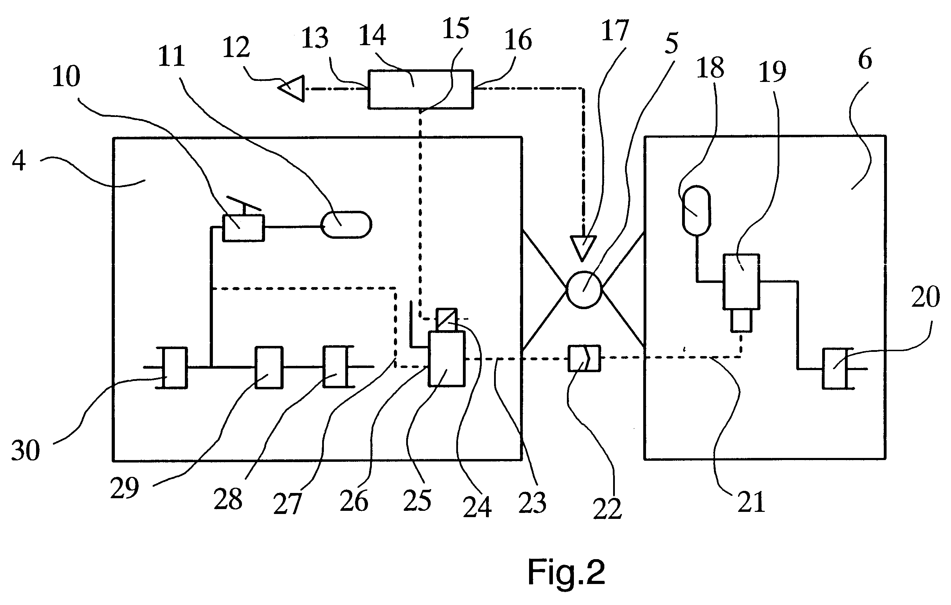

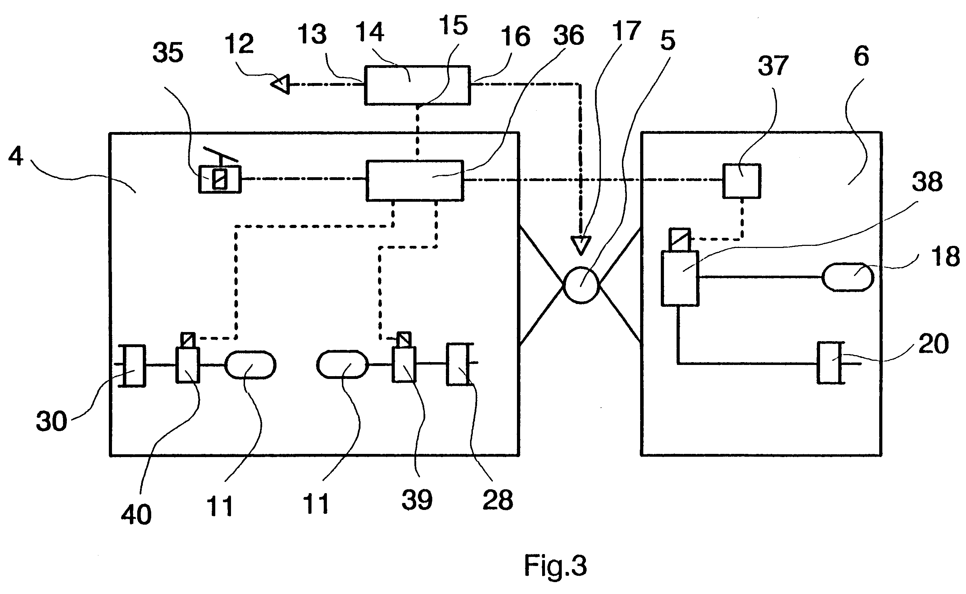

Den nunmehr folgenden Ausführungen zu Bestückungen dieses Fahrzeugzuges anhand der Figuren 2 und 3 ist die Annahme zugrundegelegt, daß der Fahrzeugzug ein Sattelzug mit einer Zugmaschine als stützendes Fahrzeug (4) und einem Sattelanhänger als gestütztes Fahrzeug (6) ist. Für anders zusammengesetzte Fahrzeugzüge gelten diese Ausführungen entsprechend.

Laut Figur 2 enthalten die Zugmaschine an jeder Achsgruppe eine Zugmaschinenbremse (28, 30) und der Sattelanhänger an seiner Achsgruppe eine Anhängerbremse (20), die alle durch Energiezufuhr betätigbar und symbolisch durch ihre Zuspanneinrichtungen dargestellt sind. Jede der genannten Bremsen kann für die betreffende Achsgruppe die einzige sein, aber auch stellvertretend für eine Mehrzahl von Bremsen stehen. Zur Erzielung einer gleichmäßigen Kraftschlußausnutzung an den gebremsten Rädern der Zugmaschine ist ein in bekannter Weise ausgebildeter automatischer Bremskraftregler (29) vorgesehen.

Die Zugmaschinenbremsen (28, 30) sind Bestandteile einer Zugmaschinenbremsanlage (10, 11, 28, 30), die außerdem aus einem Zugmaschinenenergievorrat (11), einem Bremswertgeber (10) und den zugehörigen Energieleitungen besteht. Der Bremswertgeber (10) ist einerseits mit dem Zugmaschinenenergievorrat (11) und andererseits mit den Zugmaschinenbremsen (28, 30) bzw. dem Bremskraftregler (29) verbunden.

In der Zugmaschine ist außerdem ein Anhängerenergieeinsteller (25) mit zwei Steuereingängen (24, 26) angeordnet, dessen erster Steuereingang (26) parallel zu den Zugmaschinenbremsen (28, 30) über eine Steuerleitung (27) mit dem Bremswertgeber (10) verbunden ist.

Die Anhängerbremse (20) ist Bestandteil einer Anhängerbremsanlage (18, 19, 20, 25), die außerdem aus dem in der Zugmaschine angeordneten Anhängerenergieeinsteller (25), einem Anhängerenergievorrat (18) und einer Anhängersteuereinrichtung (19), die beide im Sattelanhänger angeordnet sind, sowie den zugehörigen Energieleitungen besteht. Ein Steuereingang der Anhängersteuereinrichtung (19) ist über eine teils in der Zugmaschine, teils im Sattelanhänger angeordnete und eine Steuerkupplung (22) enthaltende Anhängersteuerleitung (21, 22, 23) mit dem Ausgang des Anhängerenergieeinstellers (25) verbunden. Die Anhängersteuereinrichtung (19) und der Anhängerenergieeinsteller (25) bilden einschließlich der zugehörigen Steuerleitungen (21, 22, 23, 27) eine Mitsteuereinrichtung (19, 25) für die Anhängerbremse (20).

Die Zugmaschinenbremsanlage (10, 11, 28, 30) und die Anhängerbremsanlage (18, 19, 20, 25) können jeweils eine Betriebsbremsanlage, eine Hilfsbremsanlage oder eine (verschleißlose) Dauerbremsanlage sein, wie sie bekannt und in vielen Ländern auch durch Gesetz definiert und vorgeschrieben sind. Die Zugmaschinenbremsanlage und/oder die Anhängerbremsanlage können in üblicher, aber nicht dargestellter Weise in wenigstens zwei Bremskreise mit getrennten Energievorräten und mehrkreisigem Bremswertgeber und Anhängerenergieeinsteller bzw. mehrkreisiger Anhängersteuereinrichtung aufgeteilt sein.

Zur Energieversorgung der Energievorräte (11 und 18) sowie des Anhängerenergieeinstellers (25) ist in der Zugmaschine noch eine in bekannter Weise aufgebaute und nicht dargestellte Energiebeschaffungsanlage einschließlich der zugehörigen Verteilungs- und Sicherungseinrichtungen sowie Energieleitungen angeordnet.

Die bisher erwähnten Bestandteile der Bremsanlagen sind für sich und in ihrem Zusammenwirken bekannt. Wenn als Energie Druck und als Energieträger ein oder mehrere Druckmittel dienen, sind die Energievorräte (11 und 18) als Druckspeicher, der Bremswertgeber (10) als fuß- oder handbetätigtes Ventil, der Anhängerenergieeinsteller (25) als Anhängersteuerventil und die Anhängersteuereinrichtung (19) als Anhängerbremsventil ausgebildet.

Zwecks einer Bremsbetätigung leitet der Fahrzeugführer ein Energieanforderungssignal in Form einer Betätigungskraft und/oder eines Betätigungsweges in den Bremswertgeber (10) ein. Dieser läßt daraufhin aus dem Zugmaschinenenergievorrat (11) Energie zu den Zugmaschinenbremsen (28, 30) und dem ersten Steuereingang (26) des Anhängerenergieeinstellers durch, deren Wert von dem Wert des Energieanforderungssignals bestimmt ist. Durch die Beaufschlagung seines ersten Steuereingangs (26) wird der Anhängerenergieeinsteller (25) veranlaßt, über die Anhängersteuerleitung (21, 22, 23) ein entsprechendes Energiesignal an die Anhängersteuereinrichtung (19) abzugeben. Dadurch wird diese veranlaßt, aus dem Anhängerenergievorrat (18) Energie mit einem dem Wert des Anhängerenergiesignals entsprechenden Wert zu der Anhängerbremse (20) durchzulassen. Vor Zuführung der von dem Bremswertgeber (10) bzw. von der Anhängersteuereinrichtung (19) durchgelassenen Energie zu der jeweiligen Bremse (28 bzw. 20) kann diese Energie in bekannter Weise durch weitere Einrichtungen beeinflußt werden. Eine solche Einrichtung für die eine Zugmaschinenbremse (30) ist der Bremskraftregler (29), andere solche Einrichtungen sind beispielsweise Ventile einer Blockierschutzanlage. Infolge der Energiezufuhr erzeugen die Motorfahrzeugbremsen (28, 30) und die Anhängerbremse (20) dem Wert der jeweils zugeführten Energie entsprechende Bremskräfte. Dabei stellt der Bremskraftregler (29) die von ihm kontrollierte Energie so ein, daß sich an den gebremsten Rädern beider Achsgruppen (1 und 2) der Zugmaschine die gleiche Kraftschlußausnutzung $\mu = B_1/G_1 = B_2/G_2$ ergibt.

Mittels des Bremswertgebers (10) steuert also der Fahrzeugführer den Einsatz der Bremsen (28, 30 und 20) und dosiert deren Wirkung bzw. beteiligt sich an der Dosierung der Wirkung.

Der Dosierung der Wirkung der Anhängerbremse (20) durch den Fahrzeugführer bzw. der Beteiligung des Fahrzeugführers an dieser Dosierung ist eine Kupplungskraftregelung überlagert. Diesem Zweck dienen eine Kraftmeßeinrichtung (17), eine Verzögerungsmeßeinrichtung (12), eine Auswerteschaltung (14) und der zweite Steuereingang (24) des Anhängerenergieeinstellers (25), der die Funktion eines elektrischen Steuereingangs der Mitsteuereinrichtung (19, 25) wahrnimmt.

Die nur schematisch dargestellte Kraftmeßeinrichtung (17), deren Ausgang mit einem Eingang (16) der Auswerteschaltung (14) verbunden ist, ist an geeigneter Stelle im Bereich der Kupplung (5) und/oder ihrer Befestigung angeordnet. Die Kraftmeßeinrichtung (17) ist von einer Bauart, welche die anhand der Figur 1 beschriebenen Ist-Komponenten ($F_{vist}$) und ($F_{hist}$) der zwischen den Einzelfahrzeugen wirkenden Kraft ($F_{ist}$) direkt mißt oder Komponenten der Kraft $F_{(ist)}$ in anderen Richtungen, also in zur Vertikalen und/oder Horizontalen geneigten Richtungen mißt, aus denen die Auswerteschaltung (14) oder eine nicht dargestellte zusätzliche Rechenstufe die genannten Ist-Komponenten berechnen kann. Solche Kraftmeßeinrichtungen sind als komplette Baueinheiten bekannt und können auch aus Einzelkraftsensoren in geeigneter Winkelanordnung zusammengestellt werden.

Die ebenfalls nur schematisch angedeutete Verzögerungsmeßeinrichtung (12), deren Ausgang mit einem Eingang (13) der Auswerteschaltung (14) verbunden ist, mißt die Ist-Fahrzeugzugverzögerung (b) und ist an geeigneter Stelle eines oder beider Einzelfahrzeuge angeordnet. Auch derartige Verzögerungsmeßeinrichtungen sind bekannt. Sie können beispielsweise aus der Blockierschutztechnik übernommen werden. Ist ein oder sind beide Einzelfahrzeuge mit einer Blockierschutzanlage ausgerüstet, so liefert diese mittels eines oder mehrerer Raddrehzahlsensoren praktisch ohne Mehraufwand Signale, welche die Ist-Fahrzeugzugverzögerung (b) abbilden.

Die Auswerteschaltung (14) weist einen mit dem zweiten Steuereingang (24) des Anhängerenergieeinstellers (25) verbundenen Ausgang (15) auf. Sie verarbeitet die Signale der Kraftmeßeinrichtung (17) und der Verzögerungsmeßeinrichtung (12) auf die nachstehend näher beschriebenen Arten und enthält alle dazu erforderlichen, für sich bekannten, Schaltungselemente mit den notwendigen Programmierungen.

In einer ersten Ausgestaltung berechnet die Auswerteschaltung (14) zunächst aus der vertikalen Ist-Komponente ($F_{vist}$) und der Ist-Fahrzeugzugverzögerung (b) eine horizontale Soll-Komponente ($F_{hsoll}$) nach der Beziehung:

$$F_{hsoll} = F_{vist} \cdot b/g \qquad\qquad\qquad (III)$$

Sodann vergleicht die Auswerteschaltung (14) die horizontale Ist-Komponente ($F_{hist}$) mit der so gewonnenen horizontalen Soll-Komponente ($F_{hsoll}$) und gibt, wenn und solange sie eine Ungleichheit feststellt, ein Steuersignal an den zweiten Steuereingang (24) des Anhängerenergieeinstellers (25) ab. Dieser verändert daraufhin das durch die Steuerleitung (21, 22, 23) zu der Anhängersteuereinrichtung (19) abgegebene Steuersignal so lange und/oder so stark, bis bzw. daß die Anhängerbremse (20) aufgrund der geänderten Energiezufuhr ihre Bremskrafterzeugung derart geändert hat, daß die Ungleichheit verschwindet. Es versteht sich, daß der Begriff "Verschwinden der Ungleichheit" im Rahmen der ausführbaren und üblichen Toleranzen zu verstehen ist.

Die so erzielte Kupplungskraftregelung hat zur Folge, daß sich an den gebremsten Rädern der Achsgruppe (3) des Sattelanhängers die gleiche Kraftschlußausnutzung $\mu$ wie an gebremsten Rädern der den Achsgruppen (1) und (2) der Zugmaschine einstellt. Das ergibt sich aus folgenden Überlegungen.

Es sei $m_A$ die Masse des Sattelanhängers (6) und $m_K$ deren auf die Kupplung (5) entfallender Anteil.

Beim Verschwinden der genannten Ungleichheit, also bei $F_{hist}=F_{hsoll}$, wird $m_k$ gerade mit der Ist-Fahrzeugzugverzögerung (b) verzögert. Dies ist der Fall, wenn die Bremskraft $B_3$ an der Achsgruppe (3) des Sattelanhängers den zugeordneten Masseanteil ($m_A-m_K$) ebenfalls gerade mit (b) verzögert.

Also:

$$B_3=(m_A-m_K) \cdot b \qquad\qquad\qquad (IV)$$

Die zugehörige Achslast ist

$$G_3=(m_A-m_K) \cdot g \qquad\qquad\qquad (V)$$

Aus (IV) und (V) folgt nach Herauskürzen von ($m_A-m_K$)

$$B_3/G_3=b/g.$$

Dieser Quotient ist nach der weiter vorn angegebenen Beziehung (II) die auch an den Rädern der Achsgruppen (1) und (2) der Zugmaschine herrschende Kraftschlußausnutzung $\mu=B_1/G_1=B_2/G_2$ .

Die Funktion der Kupplungskraftregelung kann verbessert werden, wenn die Einflüsse einer etwa vorhandenen Dauerbremsanlage und der Fahrbahnneigung (Berg- und Talfahrt) auf die Bremskraftverteilung im Fahrzeugzug berücksichtigt werden, um eine mögliche Überhitzung der Anhängerbremse (20) zu verhindern.

Dazu kann bei Beginn einer Bremsbetätigung die etwa aus der vorherigen stationären Fahrt vorhandene horizontale Kraftkomponente gemessen und gespeichert werden und als Nullpunktfehlerwert während der Kupplungskraftregelung vom momentanen $F_{hist}$ abgezogen werden.

Der Nullpunktfehler der Kraftmeßeinrichtung (17) in horizontaler Richtung wird dadurch ebenfalls abgeglichen.

In der weiter vorn erwähnten Ausgestaltung der Kraftmeßeinrichtung (17), in der diese Komponenten der Kraft ($F_{ist}$) in anderen Richtungen mißt und in der keine zwischengeschaltete Rechenstufe vorgesehen ist, übernimmt die Auswerteschaltung (14) zusätzlich zu den obengenannten Funktionen die Berechnung der vertikalen und horizontalen Ist-Komponente $F_{vist}$ und $F_{hist}$ aus den Signalen der Kraftmeßeinrichtung (17).

In einer alternativen Ausgestaltung bildet die Auswerteschaltung (14) zunächst das Verhältnis ($F_{hist}/F_{vist}$) der horizontalen Ist-Komponente ($F_{hist}$) zu der vertikalen Ist-Komponente ($F_{vist}$) und das Verhältnis der Ist-Fahrzeugzugverzögerung (b) zu der Erdbeschleunigung (g). Sodann vergleicht die Auswerteschaltung (14) diese Verhältnisse und gibt, wenn und solange sie eine Ungleichheit der Verhältnisse feststellt, das Steuersignal ab. Die Folgen und das Ergebnis sind dieselben wie bei der früheren Ausgestaltung.

In einer alternativen Ausgestaltung bildet die Auswerteschaltung (14) das Produkt ($F_{hist} \times g/F_{vist}$) aus dem Verhältnis ($F_{hist}/F_{vist}$) der horizontalen Ist-Komponente ($F_{hist}$) zu der vertikalen Ist-Komponente ($F_{vist}$) und der Erdbeschleunigung (g), vergleicht dieses Produkt mit der Ist-Fahrzeugzugverzögerung (b) und gibt, wieder mit denselben Folgen und demselben Ergebnis, bei Feststellen einer Ungleichheit das Steuersignal ab.

In nicht dargestellter Weise kann das Verschwinden der genannten Ungleichheiten auch durch zusätzlichen oder ausschließlichen Eingriff in die Dosierung der Bremsenergie in der Zugmaschine bewirkt werden.

In den zuletzt genannten Fällen, in denen die Auswerteschaltung (14) das Verhältnis $(F_{hist}/F_{vist})$ der Ist-Komponenten $(F_{hist}, F_{vist})$ auswertet, kann die Kraftmeßeinrichtung (17) als Winkelmeßeinrichtung ausgebildet sein, die den Angriffswinkel $\alpha$ zur Vertikalen oder $\beta$ zur Horizontalen der Kraft $(F_{ist})$ mißt. Es ist leicht nachvollziehbar, daß (tan $\alpha$) bzw. (ctan $\beta$) das Verhältnis $(F_{hist}/F_{vist})$ der Ist-Komponenten wiedergeben. Auch als derartige Kraftmeßeinrichtungen verwendbare Winkelmeßeinrichtungen sind bekannt. In diesem Fall müßte eine in der Auswerteschaltung (14) untergebrachte oder als eigene Zwischenstufe ausgebildete Rechenstufe aus den Signalen der als Winkelmeßeinrichtung ausgebildeten Kraftmeßeinrichtung (17) die genannten Winkelfunktionen bilden.

Die Funktion der Kupplungskraftregelung kann verbessert werden, wenn die Einflüsse einer etwa vorhandenen Dauerbremsanlage und der Fahrbahnneigung (Berg- und Talfahrt) auf die Bremskraftverteilung im Fahrzeugzug berücksichtigt werden, um eine mögliche Überhitzung der Anhängerbremse (20) zu verhindern.

Dazu kann bei Beginn einer Bremsbetätigung das etwa aus der vorherigen stationären Fahrt vorhandene Verhältnis $(F_{hist}/F_{vist})$ gemessen und gespeichert werden und als Nullpunktfehlerwert während der Kupplungskraftregelung vom momentanen Verhältnis $(F_{hist}/F_{vist})$ abgezogen werden.

Der Nullpunktfehler der als Winkelmeßeinrichtung ausgebildeten Kraftmeßeinrichtung (17) wird dadurch ebenfalls abgeglichen.

Hat die Kennlinie der Kraftmeßeinrichtung (17) einen Nullpunktfehler, so kann dieser abgeglichen werden, indem bei einem Betrieb der Zugmaschine ohne Sattelanhänger das Kraftsignal gemessen und gespeichert wird und beim anschließenden Betrieb mit Sattelanhänger der gespeicherte Wert bei einer Bremsbetätigung durch eine Abstimmungsregelung als Offsetfehlergröße von dem momentanen Signal der Kraftmeßeinrichtung (17) abgezogen werden.

Als Kriterium zur Erkennung auf Betrieb der Zugmaschine ohne Sattelanhänger kann die etwa vorhandene Signalstöramplitude des Signals der Kraftmeßeinrichtung (17) dienen. Aufgrund von Rahmen- und Einfederschwingungen des bewegten Fahrzeugzuges enthält das Signal Störsignale. Aus den Störsignalen kann in Verbindung mit einer Information über das Erreichen einer vorbestimmten Fahrgeschwindigkeit zwischen Betrieb mit und ohne Sattelanhänger unterschieden werden.

Die Auswerteschaltung (14) kann des weiteren derart ausgestaltet sein, daß sie bei einer oder mehreren Bremsbetätigungen das Verhältnis zwischen den einer oder beiden Zugmaschinenbremsen (28, 30) und der Anhängerbremse (20) zugeführten Energien speichert und bei Beginn einer oder mehrerer folgenden Bremsbetätigungen das an die zweite Steuereinrichtung (24) des Anhängerenergieeinstellers (25) abgegebene Steuersignal so bemißt, daß die Werte der den Bremsen (20, 28, 30) der Einzelfahrzeuge zugeführten Energien das gespeicherte Verhältnis annehmen. In dieser Ausgestaltung wird bei Beginn der folgenden Bremsbetätigung bzw. der folgenden Bremsbetätigungen die Energie der Anhängerbremse (20) mit einer in vorangegangenen Bremsbetätigungen gelernten Grundeinstellung bzw. Voreinstellung zugeführt. Dadurch wird vermieden, daß die Kupplungskraftregelung bei jeder Bremsbetätigung die Kraftschlußausnutzung an den Rädern der Anhängerachse von Grund auf neu einregeln muß.

Die Verzögerungsmeßeinrichtung (12), die Auswerteschaltung (14) und die Kraftmeßeinrichtung (17) sind in Figur 2 außerhalb der Einzelfahrzeuge dargestellt. Dadurch soll angedeutet sein, daß jede dieser Einrichtungen körperlich sowohl in der Zugmaschine als auch in dem Sattelanhänger untergebracht, aber auch auf diese verteilt, sein kann. Es ist auch möglich, daß in nicht dargestellter Weise die Anhängersteuereinrichtung (19) mit einer zweiten, elektrischen, Steuereinrichtung versehen ist. In diesem Fall würde der zweite Steuereingang der Anhängesteuereinrichtung (19) den elektrischen Steuereingang der Mitsteuereinrichtung (19, 25) bilden, wodurch der zweite Steuereingang (24) des Anhängerenergieeinstellers (25), jedenfalls zur Kupplungskraftregelung, entbehrlich würde.

In dem Fahrzeugzug gemäß Figur 3 werden in der Zugmaschinenbremsanlage (11, 28, 30, 35, 36, 39, 40) und der Anhängerbremsanlage (18, 20, 37, 38) unterschiedliche Energiearten für die Bremsbetätigung und deren Steuerung eingesetzt, nämlich zur Steuerung elektrische Energie und als Betätigungsenergie beliebige Energie. Die im folgenden erwähnten Bauelemente dieser Bremsanlagen sind bekannt oder lassen sich durch einfache Adaptionen bekannter Bauelemente herstellen. Mit Druck als Betätigungsenergie sind solche gemischten Anlagen in Straßenfahrzeugen und Straßen-Fahrzeugzügen üblich.

Jeder Zugmaschinenbremse (28, 30) ist in diesem Fall ein eigener Energievorrat (11) zugeordnet. Die Zugmaschinenbremsanlage (11, 28, 30, 35, 36, 39, 40) besteht außerdem aus einem elektrischen Bremswertgeber (35), einer Zugmaschinenelektronik (36) und je einem Energieverteiler (39 und 40) für jede Zugmaschinenbremse (28 und 30). Die Zugmaschinenbremsanlage (11, 28, 30, 35, 36, 39, 40) ist in diesem Fall also zweikreisig dargestellt.

Die Anhängerbremsanlage (18, 20, 37, 38) besteht in diesem Fall außer aus dem Anhängerenergievorrat (18) und der Anhängerbremse (20) aus einer Anhängerelektronik (37) und einem Energieverteiler (38). Ein Eingang der Anhängerelektronik (37) ist mit einem Ausgang der Zugmaschinenelektronik (36) verbunden. Die Energieverteiler (38, 39, 40) können die einzigen Energieverteiler der Zugmaschine bzw. des Sattelanhängers sein, es können aber auch im Falle mehrerer Bremsen pro Achsgruppe je Bremse eigene Energieverteiler vorgesehen sein. Ein Energieverteiler in einem Straßenfahrzeug oder einem Straßen-Fahrzeugzug mit Druck als Betätigungsenergie wird häufig "elektrisch betätigter Druckmodulator" genannt.

Der Ausgang des Bremswertgebers (35) ist mit einem Eingang der Zugmaschinenelektronik (36) verbunden. Der das Steuersignal zur Kupplungskraftregelung abgebende Ausgang (15) der Auswerteschaltung (14) ist ebenfalls mit einem Eingang der Zugmaschinenelektronik (36) verbunden. Die Einrichtung zur Kupplungskraftregelung wirkt wie beim früheren Ausführungsbeispiel beschrieben.

Die Energieverteiler (38, 39, 40) besitzen jeweils einen Energieteil, an dem sie einerseits mit dem zugeordneten Energievorrat (11 bzw. 18) und andererseits mit der zugeordneten Bremse (28 bzw. 30 bzw. 20) verbunden sind. Die Energieverteiler (38, 39, 40) besitzen außerdem jeweils einen elektrischen Steuerteil, dessen Eingang mit einem Ausgang der jeweiligen Elektronik (36 bzw. 37) verbunden ist.

Bei einer Bremsbetätigung setzt der Bremswertgeber (35) das von dem Fahrzeugführer eingeleitete Energieanforderungssignal in ein elektrisches Energieanforderungssignal um, welches dem dem Bremswertgeber (35) zugeordneten Eingang der Zugmaschinenelektronik (36) zugeführt wird. Diese bereitet das Energieanforderungssignal zu Steuersignalen für die Energieverteiler (39, 40) der Zugmaschine und die Anhängerelektronik (37) auf. Dabei wertet die Zugmaschinenelektronik (36) das etwa von der Auswerteschaltung (14) empfangene Steuersignal aus.

Die Anhängerelektronik (37) bereitet das von der Zugmaschinenelektronik (36) empfangene Steuersignal zu einem Steuersignal für den zugeordneten Energieverteiler (38) auf. Bei der Aufbereitung der von ihnen an die Energieverteiler (38 bzw. 39 bzw. 40) abgegebenen Steuersignale können die Zugmaschinenelektronik (36) und die Anhängerelektronik (37) je nach näherer Ausgestaltung in bekannter und deshalb nicht näher beschriebener Weise in Signalform zugeführte, spezifische Fahrzeugparameter verarbeiten. Als derartige Fahrzeugparameter kommen insbesondere eine oder mehrere Rad- bzw. Achslasten in Betracht. In diesem Fall passen die Zugmaschinenelektronik (36) und/oder die Anhängerelektronik (37) das Steuersignal wenigstens eines Energieverteilers (38 bzw. 39 bzw. 40) der Lastverteilung an.

In der Zugmaschine stellt die Zugmaschinenelektronik (36) damit auf elektronischem Wege die lastabhängige Bremskraftregelung und damit die gleichmäßige Kraftschlußausnutzung an den gebremsten Rädern der Achsgruppen (1, 2) der Zugmaschine her.

Bei Erhalt des jeweiligen Steuersignals läßt jeder Energieverteiler (38 bzw. 39 bzw. 40) aus dem zugeordneten Energievorrat (11 bzw. 18) Energie zu der zugeordneten Bremse (28 bzw. 30 bzw. 20) durch, deren Wert von dem Wert des Steuersignals bestimmt ist, woraufhin die Bremsen entsprechende Bremskräfte erzeugen. Diese sind durch die beschriebene Signalverarbeitung in der Zugmaschinenelektronik (36) bzw. in der Anhängerelektronik (37) im Sinne gleichmäßiger Kraftschlußausnutzung und damit im Sinne der Stabilitätsoptimierung auf die gebremsten Räder der Achsgruppen (1, 2, 3) verteilt.

Im vorliegenden Ausführungsbeispiel kann in nicht dargestellter Weise das von der Auswerteschaltung (14) abgegebene Steuersignal alternativ der Anhängerelektronik (37) zugeführt und von dieser ausgewertet werden.

Die Mitsteuereinrichtung ist in diesem Ausführungsbeispiel in die Elektroniken (36, 37), in der zuletzt genannten Ausgestaltung in die Anhängerelektronik (37), integriert.

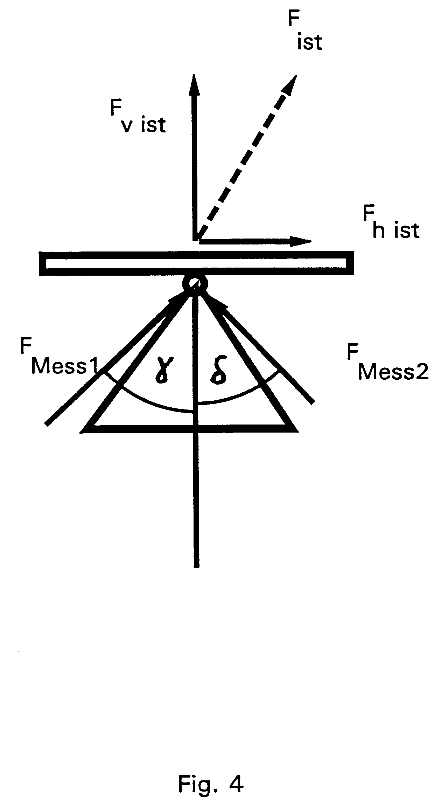

Figur 4 zeigt schematisch die Gegebenheiten einer Kraftmeßeinrichtung (17), welche Komponenten ($F_{Mess1}$ und $F_{Mess2}$) der Kraft ($F_{ist}$) in zur Vertikalen und/oder Horizontalen geneigten Richtungen mißt. Die Richtungen sind mit ihren Winkeln ($\gamma$ bzw. $\delta$) zur Vertikalen bezeichnet. Es läßt sich nachweisen, daß folgende Beziehungen gelten:

$$F_{hist} = F_{Mess1} \cdot \sin\gamma - F_{Mess2} \cdot \sin\delta \qquad\qquad (VI)$$

$$F_{vist} = F_{Mess1} \cdot \cos\gamma + F_{Mess2} \cdot \cos\delta \qquad\qquad (VII)$$

Für die Ausgestaltungen, die das Verhältnis ($F_{hist}/F_{vist}$) der Ist-Komponenten auswerten, ergibt sich dieses als der Quotient aus den Gleichungen (VI) und (VII).

Eine solche Kraftmeßeinrichtung ist insbesondere dann vorteilhaft, wenn, wie üblich, die Meßgenauigkeit der verwendeten Sensoren im unteren Teil von deren Arbeitsbereich verringert ist. In einem solchen Fall liefert die Kraftmeßeinrichtung (17) bei direkter Messung der horizontalen Ist-Komponente ($F_{hist}$) für kleine Werte derselben ungenaue Ergebnisse, welche die Qualität der Kupplungskraftregelung beeinträchtigen können.

In der in Figur 4 skizzierten Kraftmeßeinrichtung sind hingegen sämtliche Sensoren durch die vertikale Ist-Komponente ($F_{ist}$) ständig so stark vorbelastet, daß sie ständig, also schon bei geringen horizontalen Kraftkomponenten, ja sogar ohne jegliche horizontale Kraftkomponente, in einem Arbeitsbereich mit befriedigender Meßgenauigkeit arbeiten.

Als besonders vorteilhaft hat sich die Festlegung der Winkel ($\gamma$ und $\delta$) auf jeweils 45° herausgestellt.

## Patentansprüche

1. Verfahren zur Abbremsung eines aus wenigstens zwei Einzelfahrzeugen (4, 6) bestehenden Fahrzeugzuges, worin wenigstens ein Einzelfahrzeug (6) von einem stützenden Einzelfahrzeug (4) gestützt wird und die Einzelfahrzeuge an jeder Achsgruppe (1, 2, 3) wenigstens eine durch Energiezufuhr betätigte Bremse (28, 30, 20) aufweisen,

mit folgenden Schritten bei einer Bremsbetätigung

a) es werden das Verhältnis ($F_{hist}/F_{vist}$) der horizontalen Ist-Komponente (($F_{hist}$) zu der vertikalen Ist-Komponente ($F_{vist}$) der zwischen den Einzelfahrzeugen (4, 6) wirkenden Kraft ($F_{ist}$) und das Verhältnis (b/g) der Ist-Fahrzeugzugverzögerung (b) zu der Erdbeschleunigung (g) ermittelt;
b) der Wert der der Bremse bzw. den Bremsen (28, 30, 20) wenigstens eines Einzelfahrzeugs (4, 6) zugeführten Energie wird so eingestellt, daß sich die genannten Verhältnisse ($F_{hist}/F_{vist}$) und (b/g) einander angleichen,
<u>dadurch gekennzeichnet,</u>
daß das Verhältnis ($F_{hist}/F_{vist}$) der horizontalen Ist-Komponente ($F_{hist}$) zu der vertikalen Ist-Komponente ($F_{vist}$) mittels Komponenten ($F_{Mess1}$, $F_{Mess2}$) der zwischen den Einzelfahrzeugen (4, 6) wirkenden Kraft ($F_{ist}$) in zur Vertikalen und/oder Horizontalen um Winkel ($\gamma$ bzw. $\delta$) geneigten Richtungen ermittelt wird.

2. Verfahren zur Abbremsung eines aus wenigstens zwei Einzelfahrzeugen (4, 6) bestehenden Fahrzeugzuges, worin wenigstens ein Einzelfahrzeug (6) von einem stützenden Einzelfahrzeug (4) gestützt wird und die Einzelfahrzeuge an jeder Achsgruppe (1, 2, 3) wenigstens eine durch Energiezufuhr betätigte Bremse (28, 30, 20) aufweisen, mit folgenden Schritten bei einer Bremsbetätigung

a) es werden das Verhältnis ($F_{hist}/F_{vist}$) der horizontalen Ist-Komponente ($F_{hist}$) zu der vertikalen Ist-Komponente ($F_{vist}$) der zwischen den Einzelfahrzeugen (4, 6) wirkenden Kraft ($F_{ist}$) und die Ist-Fahrzeugverzögerung (b) ermittelt,

b) der Wert der der Bremse bzw. den Bremsen (28, 30, 20) wenigstens eines Einzelfahrzeugs (4, 6) zugeführten Energie wird so eingestellt, daß sich das Produkt ($F_{hist}$ x g/$F_{vist}$) aus dem genannten Verhältnis ($F_{hist}/F_{vist}$) und der Erdbeschleunigung (g) dem Wert der Ist-Fahrzeugzugverzögerung (b) angleicht,
<u>dadurch gekennzeichnet,</u>
daß das Verhältnis ($F_{hist}/F_{vist}$) der horizontalen Ist-Komponente ($F_{hist}$) zu der vertikalen Ist-Komponente ($F_{vist}$) mittels Komponenten ($F_{Mess1}$, $F_{Mess2}$) der zwischen den Einzelfahrzeugen (4, 6) wirkenden Kraft ($F_{ist}$) in zur Vertikalen und/oder Horizontalen um Winkel ($\gamma$ bzw. $\delta$) geneigten Richtungen ermittelt wird.

3. Verfahren nach einem der Ansprüche 1 oder 2,
<u>dadurch gekennzeichnet,</u>
daß die Winkel ($\gamma$ bzw. $\delta$) der Komponenten ($F_{Mess1}$, $F_{Mess2}$) der zwischen den Einzelfahrzeugen wirkenden Kraft ($F_{ist}$) jeweils 45° betragen.

4. Verfahren nach einem der vorhergehenden Ansprüche, <u>dadurch gekennzeichnet,</u> daß bei Beginn der Bremsbetätigung die Energie der Bremse bzw. den Bremsen (20) des gestützten Einzelfahrzeugs (6) mit einer in vorangegangenen Bremsbetätigungen gelernten Grundeinstellung zugeführt wird.

5. Verfahren nach Anspruch 4, <u>dadurch gekennzeichnet,</u> daß die horizontale Ist-Komponente ($F_{hist}$) und die vertikale Ist-Komponente ($F_{vist}$) mittels Kraftmessungen in zur Vertikalen und/oder zur Horizontalen geneigten Richtungen ($\gamma$, $\delta$) ermittelt werden.

6. Verfahren nach einem der Ansprüche 4 oder 5, <u>dadurch gekennzeichnet,</u> daß als horizontale Ist-Komponente ($F_{hist}$) der ermittelte Wert, vermindert um die bei Beginn der Bremsbetätigung etwa aus der vorherigen Fahrt mit gleichbleibender Fahrgeschwindigkeit vorhandene horizontale Kraftkomponente, verwendet wird.

7. Verfahren nach einem der Ansprüche 1 oder 2, <u>dadurch gekennzeichnet,</u> daß als Verhältnis ($F_{hist}/F_{vist}$) der ermittelte Wert, vermindert um das bei Beginn der Bremsbetätigung etwa aus der vorherigen Fahrt mit gleichbleibender Fahrgeschwindigkeit vorhandene Verhältnis der horizontalen zur vertikalen Kraftkomponente, verwendet wird.

8. Fahrzeugzug zur Durchführung des Verfahrens nach Anspruch 1 mit

einem die Energiezufuhr zu den Bremsen (28, 30) des stützenden Einzelfahrzeugs (4) wenigstens mitbestimmenden Bremswertgeber (10; 35),

einer die Energiezufuhr zu der Bremse (20) des gestützten Einzelfahrzeugs (6) wenigstens mitbestimmenden Mitsteuereinrichtung (19, 25; 36, 37; 37) mit wenigstens einem elektrischen Steuereingang (24),

einer die zwischen den Einzelfahrzeugen (4, 6) wirkende Kraft ($F_{ist}$) übertragenden Kupplung (5)

einer Kraftmeßeinrichtung (17),

einer die Ist-Fahrzeugverzögerung (b) messenden Verzögerungsmeßeinrichtung (12) sowie

einer Auswerteschaltung (14), die mit der Kraftmeßeinrichtung (17) und der Verzögerungsmeßeinrichtung (12) verbundene Eingange (16, 13) und wenigstens einen mit dem elektrischen Steuereingang (24) der Mitsteuereinrichtung (19, 25; 36, 37; 37) verbundenen Ausgang (15) aufweist,
<u>gekennzeichnet durch</u>

a) eine Ausbildung und Anordnung der Kraftmeßeinrichtung (17) derart, daß diese Komponenten ($F_{Mess1}$, $F_{Mess2}$) der zwischen den Einzelfahrzeugen wirkenden Kraft ($F_{ist}$) in zur Vertikalen und/oder Horizontalen um Winkel ($\delta$ bzw. $\gamma$) geneigten Richtungen mißt,

b) eine Ausbildung der Auswerteschaltung (14) derart, daß

ba) diese aus den genannten Komponenten ($F_{Mess1}$, $F_{Mess2}$) und den deren Richtungen beschreiben-den Winkeln ($\gamma$ bzw. $\delta$) das Verhältnis (($F_{hist}/F_{vist}$) der horizontalen Ist-Komponente ($F_{hist}$) zu der ver-tikalen Ist-Komponente ($F_{vist}$) der zwischen den Einzelfahrzeugen (4, 6) wirkenden Kraft ($F_{ist}$) und das Verhältnis (b/g) der Ist-Fahrzeugverzögerung (b) zu der Erdbeschleunigung (g) bildet,

bb) die genannten Verhältnisse ($F_{hist}/F_{vist}$) und (b/g) miteinander vergleicht,

bc) beim Feststellen einer Ungleichheit ein Steuersignal an die Mitsteuereinrichtung (19, 25; 36, 37; 37) abgibt.

9.  Fahrzeugzug zur Durchführung des Verfahrens nach Anspruch 2 mit

einem die Energiezufuhr zu den Bremsen (28, 30) des stützenden Einzelfahrzeugs (4) wenigstens mitbestimmenden Bremswertgeber (10; 35),

einer die Energiezufuhr zu der Bremse (20) des gestutzten Einzelfahrzeugs (6) wenigstens mitbestimmenden Mitsteuereinrichtung (19, 25; 36, 37; 37) mit wenigstens einem elektrischen Steuereingang (24),

einer die zwischen den Einzelfahrzeugen (4, 6) wirkende Kraft ($F_{ist}$) übertragenden Kupplung (5)

einer Kraftmeßeinrichtung (17),

einer die Ist-Fahrzeugverzögerung (b) messenden Verzögerungsmeßeinrichtung (12) sowie

einer Auswerteschaltung (14), die mit der Kraftmeßeinrichtung (17) und der Verzögerungsmeßeinrichtung (12) verbundene Eingange (16, 13) und wenigstens einen mit dem elektrischen Steuereingang (24) der Mitsteuereinrichtung (19, 25; 36, 37; 37) verbundenen Ausgang (15) aufweist,
<u>gekennzeichnet durch</u>

a) eine Ausbildung und Anordnung der Kraftmeßeinrichtung (17) derart, daß diese Komponenten ($F_{Mess1}$, $F_{Mess2}$) der zwischen den Einzelfahrzeugen wirkenden Kraft ($F_{ist}$) in zur Vertikalen und/oder Horizontalen um Winkel ($\delta$ bzw. $\gamma$) geneigten Richtungen mißt,

b) eine Ausbildung der Auswerteschaltung (14) derart, daß

ba) diese aus den genannten Komponenten ($F_{Mess1}$, $F_{Mess2}$) und den deren Richtungen beschreiben-den Winkeln ($\gamma$ bzw. $\delta$) das Verhältnis ($F_{hist}/F_{vist}$) der horizontalen Ist-Komponente ($F_{hist}$) zu der verti-kalen Ist-Komponente ($F_{vist}$) der zwischen den Einzelfahrzeugen (4, 6) wirkenden Kraft ($F_{ist}$) und das Produkt ($F_{hist} \times g/F_{vist}$) aus diesem Verhältnis (Fhist/Fvist) und der Erdbeschleunigung (g) bildet,

bb) das genannte Produkt ($F_{hist} \times g/F_{vist}$) mit der Ist-Fahrzeugverzögerung (b) vergleicht,

bc) beim Feststellen einer Ungleichheit ein Steuersignal an die Mitsteuereinrichtung (19, 25; 36, 37; 37) abgibt.

**10.** Fahrzeugzug nach einem der Ansprüche 8 oder 9, <u>gekennzeichnet</u> durch eine Ausbildung der Auswerteschaltung (14) derart, daß diese bei wenigstens einer Bremsbetätigung das Verhältnis zwischen der wenigstens einer Bremse (28, 30) des stützenden Einzelfahrzeugs (4) und der der Bremse (20) des gestützten Einzelfahrzeugs (6) zugeführten Energien speichert und bei Beginn wenigstens einer folgenden Bremsbetätigung das an die Mitsteuereinrichtung (19, 25; 36, 37; 37) abgegebene Steuersignal so bemißt, daß die Werte der den genannten Bremsen (28, 30, 20) zugeführten Energien das gespeicherte Verhältnis annehmen.

**Claims**

**1.** Method for braking a vehicle combination consisting of at least two individual vehicles (4, 6), in which at least one individual vehicle (6) is supported by a supporting individual vehicle (4) and the individual vehicles comprise on each axle group (1, 2, 3) at least one brake (28, 30, 20) that is actuated by the supply of energy, having the following steps during brake actuation:

a) the ratio ($F_{hact}/F_{vact}$) of the actual horizontal component ($F_{hact}$) to the actual vertical component ($F_{vact}$) of the force ($F_{act}$) acting between the individual vehicles (4, 6) and the ratio (b/g) of the actual vehicle combination deceleration (b) to the acceleration due to gravity (g) are determined;

b) the value of the energy supplied to the brake or brakes (28, 30, 20) of at least one individual vehicle (4, 6) is so adjusted that the said ratios ($F_{hact}/F_{vact}$) and (b/g) are brought into line with one another, characterised in that the ratio ($F_{hact}/F_{vact}$) of the actual horizontal component ($F_{hact}$) to the actual vertical component ($F_{vact}$) is determined by means of components ($F_{meas1}$, $F_{meas2}$) of the force ($F_{act}$) acting between the individual vehicles (4, 6) in directions that are inclined to the vertical and/or to the horizontal by an angle ($\gamma$, $\delta$, respectively).

**2.** Method for braking a vehicle combination consisting of at least two individual vehicles (4, 6), in which at least one individual vehicle (6) is supported by a supporting individual vehicle (4) and the individual vehicles comprise on each axle group (1, 2, 3) at least one brake (28, 30, 20) that is actuated by the supply of energy, having the following steps during brake actuation:

a) the ratio ($F_{hact}/F_{vact}$) of the actual horizontal component ($F_{hact}$) to the actual vertical component ($F_{vact}$) of the force ($F_{act}$) acting between the individual vehicles (4, 6) and the actual vehicle deceleration (b) are determined,

b) the value of the energy supplied to the brake or brakes (28, 30, 20) of at least one individual vehicle (4, 6) is so adjusted that the product ($F_{hact} \times g/F_{vact}$) of the said ratio ($F_{hact}/F_{vact}$) and the acceleration due to gravity (g) is brought into line with the value of the actual vehicle combination deceleration (b), characterised in that the ratio ($F_{hact}/F_{vact}$) of the actual horizontal component ($F_{hact}$) to the actual vertical component ($F_{vact}$) is determined by means of components ($F_{meas1}$, $F_{meas2}$) of the force ($F_{act}$) acting between the individual vehicles (4, 6) in directions that are inclined to the vertical and/or to the horizontal by an angle ($\gamma$, $\delta$, respectively).

**3.** Method according to either of claims 1 or 2, characterised in that each of the angles ($\gamma$, $\delta$) of the components ($F_{meas1}$, $F_{meas2}$) of the force ($F_{act}$) acting between the individual vehicles is 45°.

**4.** Method according to any one of the preceding claims, characterised in that at the start of brake actuation the energy is supplied to the brake or brakes (20) of the supported individual vehicle (b) at a basic setting learnt in preceding brake actuations.

**5.** Method according to claim 4, characterised in that the actual horizontal component ($F_{hact}$) and the actual vertical component ($F_{vact}$) are determined by means of force measurements in directions ($\gamma$, $\delta$) that are inclined to the vertical and/or to the horizontal.

**6.** Method according to either of claims 4 or 5, characterised in that the detected value less the horizontal force component that is present at the start of the brake actuation, for example, from the previous travel at a constant travelling speed is used as actual horizontal component ($F_{hact}$).

**7.** Method according to either of claims 1 or 2, characterised in that the detected value less the ratio of the horizontal force component to the vertical force component which is present at the start of the brake actuation, for example, from the previous travel at a constant travelling speed is used as the ratio ($F_{hact}/F_{vact}$).

8. Vehicle combination for carrying out the method according to claim 1, having

a brake value transducer (10; 35) that at least jointly determines the supply of energy to the brakes (28,30) of the supporting individual vehicle (4),

a joint control device (19, 25; 36, 37; 37) having at least one electrical control input (24), which at least jointly determines the supply of energy to the brake (20) of the supported individual vehicle (6),

a coupling (5) that transmits the force ($F_{act}$) acting between the individual vehicles (4, 6),

a force measuring device (17),

a deceleration measuring device (12) that measures the actual vehicle deceleration (b), and

an evaluating circuit (14) having inputs (16, 13) that are connected to the force measuring device (17) and the deceleration measuring device (12) and at least one output (15) that is connected to the electrical control input (24) of the joint control device (19, 25; 36, 37; 37),
characterised by

a) a construction and arrangement of the force measuring device (17) in such a manner that it measures components ($F_{meas1}$, $F_{meas2}$) of the force ($F_{act}$) acting between the individual vehicles in directions that are inclined to the vertical and/or to the horizontal by angles ($\delta$, $\gamma$, respectively),

b) a construction of the evaluating circuit (14) in such a manner that,

ba), from the said components ($F_{meas1}$, $F_{meas2}$) and from the angles ($\gamma$, $\delta$) that describe the directions thereof, the evaluating circuit forms the ratio ($F_{hact}/F_{vact}$) of the actual horizontal component ($F_{hact}$) to the actual vertical component ($F_{vact}$) of the force ($F_{act}$) acting between the individual vehicles (4, 6) and the ratio (b/g) of the actual vehicle deceleration (b) to the acceleration due to gravity (g),

bb) compares the said ratios ($F_{hact}/F_{vact}$) and (b/g) with one another, and

bc) on detecting an inequality emits a control signal to the joint control device (19, 25; 36, 37; 37).

9. Vehicle combination for carrying out the method according to claim 2, having

a brake value transducer (10; 35) that at least jointly determines the supply of energy to the brakes (28, 30) of the supporting individual vehicle (4),

a joint control device (19, 25; 36, 37; 37) having at least one electrical control input (24), which at least jointly determines the supply of energy to the brake (20) of the supported individual vehicle (6),

a coupling (5) that transmits the force ($F_{act}$) acting between the individual vehicles (4,6),

a force measuring device (17),

a deceleration measuring device (12) that measures the actual vehicle deceleration (b), and

an evaluating circuit (14) having inputs (16, 13) that are connected to the force measuring device (17) and the deceleration measuring device (12) and at least one output (15) that is connected to the electrical control input (24) of the joint control device (19, 25; 36, 37; 37),
characterised by

a) a construction and arrangement of the force measuring device (17) in such a manner that it measures components ($F_{meas1}$, $F_{meas2}$) of the force ($F_{act}$) acting between the individual vehicles in directions that are inclined to the vertical and/or to the horizontal by angles ($\delta$, $\gamma$, respectively),

b) a construction of the evaluating circuit (14) in such a manner that,

ba), from the said components ($F_{meas1}$, $F_{meas2}$) and from the angles ($\gamma$, $\delta$) that describe the directions thereof, the evaluating circuit forms the ratio ($F_{hact}/F_{vact}$) of the actual horizontal component ($F_{hact}$) to the actual vertical component ($F_{vact}$) of the force ($F_{act}$) acting between the individual vehicles (4, 6) and the product ($F_{hact}$ x $g/F_{vact}$) of that ratio ($F_{hact}/F_{vact}$) and the acceleration due to gravity (g),

bb) compares the said product ($F_{hact}$ x $g/F_{vact}$) with the actual vehicle deceleration (b), and

bc) on detecting an inequality emits a control signal to the joint control device (19, 25; 36, 37; 37).

10. Vehicle combination according to either of claims 8 or 9, characterised by a construction of the evaluating circuit (14) in such a manner that during at least one brake actuation it stores the ratio between the energy supplied to at least one brake (28, 30) of the supporting individual vehicle (4) and the energy supplied to the brake (20) of the supported individual vehicle (6) and at the start of at least one subsequent brake actuation so dimensions the control signal emitted to the joint control device (19, 25; 36, 37; 37) that the values of the energies supplied to the said brakes (28, 38, 20) assume the stored ratio.

**Revendications**

1. Procédé de freinage d'un train routier composé d'au moins deux véhicules élémentaires (4, 6), dans lequel au moins un véhicule élémentaire (6) est soutenu ou semi-porté par un véhicule élémentaire (4) soutenant ou porteur et les véhicules élémentaires possèdent au moins un frein (28, 30, 20), actionné par amenée d'énergie, sur chaque groupe d'essieu(x) (1, 2, 3), procédé qui comprend les étapes suivantes lors d'un actionnement des freins

   a) détermination du rapport ($F_{hré}/F_{vré}$) de la composante horizontale réelle ($F_{hré}$) à la composante verticale réelle ($F_{vré}$) de la force ($F_{ré}$) agissant entre les véhicules élémentaires (4, 6) et du rapport (b/g) de la décélération réelle (b) du train routier à l'accélération de la pesanteur (g); et
   b) réglage de la valeur de l'énergie amenée au frein ou aux freins (28, 30, 20) d'au moins un véhicule élémentaire (4, 6), de manière que lesdits rapports ($F_{hré}/F_{Vré}$ et (b/g) s'égalisent,
   <u>caractérisé en ce que</u>
   on détermine le rapport ($F_{hré}/F_{vré}$) de la composante horizontale réelle ($F_{hré}$) à la composante verticale réelle ($F_{vré}$) au moyen de composantes ($F_{mes1}$, $F_{mes2}$) de la force ($F_{ré}$) agissant entre les véhicules élémentaires (4, 6) orientées suivant des directions inclinées d'un angle ($\gamma$ ou $\delta$) par rapport à la verticale et/ou par rapport à l'horizontale.

2. Procédé de freinage d'un train routier composé d'au moins deux véhicules élémentaires (4, 6), dans lequel au moins un véhicule élémentaire (6) est soutenu ou semi-porté par un véhicule élémentaire (4) soutenant ou porteur et les véhicules élémentaires possèdent au moins un frein (28, 30, 20), actionné par amenée d'énergie, sur chaque groupe d'essieu(x) (1, 2, 3), procédé qui comprend les étapes suivantes lors d'un actionnement des freins

   a) détermination du rapport ($F_{hré}/F_{vré}$) de la composante horizontale réelle ($F_{hré}$) à la composante verticale réelle ($F_{vré}$) de la force ($F_{ré}$) agissant entre les véhicules élémentaires (4, 6) et du rapport (b/g) de la décélération réelle (b) du train routier à l'accélération de la pesanteur (g); et
   b) réglage de la valeur de l'énergie amenée au frein ou aux freins (28, 30, 20) d'au moins un véhicule élémentaire (4, 6), de manière que le produit ($F_{hré}$ x $g/F_{vré}$) du rapport mentionné ($F_{hré}/F_{vré}$) et de l'accélération de la pesanteur (g) s'égalise avec la valeur de la décélération réelle (b) du train routier,
   <u>caractérisé en ce que</u>
   on détermine le rapport ($F_{hré}/F_{vré}$) de la composante horizontale réelle ($F_{hré}$) à la composante verticale réelle ($F_{vré}$) au moyen de composantes ($F_{mes1}$, $F_{mes2}$) de la force ($F_{ré}$) agissant entre les véhicules élémentaires (4, 6) orientées suivant des directions inclinées d'un angle ($\gamma$ ou $\delta$) par rapport à la verticale et/ou par rapport à l'horizontale.

3. Procédé selon la revendication 1 ou 2, caractérisé en ce que les angles ($\gamma$ et $\delta$) des composantes ($F_{mes1}$, $F_{mes2}$) de la force ($F_{ré}$) agissant entre les véhicules élémentaires sont chacun de 45°.

4. Procédé selon une des revendications précédentes, caractérisé en ce que, au début de l'actionnement des freins, l'amenée d'énergie au frein ou aux freins (20) du véhicule élémentaire semi-porté (6) s'effectue suivant un réglage de base appris lors d'actionnements de freins précédents.

5. Procédé selon la revendication 4, caractérisé en ce que la composante horizontale réelle ($F_{hré}$) et la composante verticale réelle ($F_{vré}$) sont déterminées par des mesures dynamométriques suivant des directions ($\gamma$, $\delta$) inclinées par rapport à la verticale et/ou par rapport à l'horizontale.

6. Procédé selon la revendication 4 ou 5, caractérisé en ce que, comme composante horizontale réelle ($F_{hré}$), on utilise la valeur déterminée, diminuée de la composante de force horizontale existant éventuellement, au début de l'actionnement des freins, à la suite de la marche précédente à vitesse constante.

7. Procédé selon la revendication 1 ou 2, caractérisé en ce que, comme rapport ($F_{hré}/F_{vré}$), on utilise la valeur déterminée, diminuée du rapport de la composante de force horizontale à la composante de force verticale existant éventuellement, au début de l'actionnement des freins, à la suite de La marche précédente à vitesse constante.

8. Train routier pour la mise en oeuvre du procédé selon la revendication 1, comprenant

un générateur de valeur de freinage (10; 35) participant au moins à la détermination de l'amenée d'énergie aux freins (28, 30) du véhicule élémentaire porteur (4),
un dispositif de commande conjuguée (19, 25; 36, 37; 37) qui participe au moins à la détermination de l'amenée d'énergie au frein (20) du véhicule élémentaire semiporté (6) et possède au moins une entrée de commande électrique (24),
un attelage (5) transmettant la force ($F_{ré}$) agissant entre les véhicules élémentaires (4, 6),
un dispositif dynamométrique (17),
un dispositif mesureur de décélération (12) qui mesure la décélération réelle (b) du véhicule,
ainsi qu'un circuit d'évaluation (14) qui présente des entrées (16, 13) connectées au dispositif dynamométrique (17) et au dispositif mesureur de décélération (12), de même qu'au moins une sortie (15) connectée à l'entrée de commande électrique (24) du dispositif de commande conjuguée (19, 25; 36, 37; 37),
<u>caractérisé par</u>

a) une réalisation et un agencement du dispositif dynamométrique (17) tels que celui-ci mesure des composantes ($F_{mes1}$, $F_{mes2}$) de la force ($F_{ré}$) agissant entre les véhicules élémentaires, qui sont orientées suivant des directions inclinées d'un angle ($\delta$ ou $\gamma$) par rapport à la verticale et/ou par rapport à l'horizontale,
b) une réalisation du circuit d'évaluation (14) telle que ce circuit

ba) forme, à partir des composantes ($F_{mes1}$, $F_{mes2}$) mentionnées et des angles ($\gamma$ ou $\delta$) décrivant leurs directions, le rapport ($F_{hré}/F_{vré}$) de la composante horizontale réelle ($F_{hré}$) à la composante verticale réelle ($F_{vré}$) de la force ($F_{ré}$) agissant entre les véhicules élémentaires (4, 6) et le rapport (b/g) de la décélération réelle (b) du véhicule à l'accélération de la pesanteur (g),
bb) compare les rapports ($F_{hré}/F_{vré}$) et (b/g) mentionnés entre eux et
bc) délivre un signal de commande au dispositif de commande conjuguée (19, 25; 36, 37; 37) s'il constate une inégalité.

9. Train routier pour la mise en oeuvre du procédé selon la revendication 2, comprenant

un générateur de valeur de freinage (10; 35) participant au moins à la détermination de l'amenée d'énergie aux freins (28, 30) du véhicule élémentaire porteur (4),
un dispositif de commande conjuguée (19, 25; 36, 37; 37) qui participe au moins à la détermination de l'amenée d'énergie au frein (20) du véhicule élémentaire semiporté (6) et possède au moins une entrée de commande électrique (24),
un attelage (5) transmettant la force ($F_{ré}$) agissant entre les véhicules élémentaires (4, 6),
un dispositif dynamométrique (17),
un dispositif mesureur de décélération (12) qui mesure la décélération réelle (b) du véhicule,
ainsi qu'un circuit d'évaluation (14) qui présente des entrées (16, 13) connectées au dispositif dynamométrique (17) et au dispositif mesureur de décélération (12), de même qu'au moins une sortie (15) connectée à l'entrée de commande électrique (24) du dispositif de commande conjuguée (19, 25; 36, 37; 37),
<u>caractérisé par</u>

a) une réalisation et un agencement du dispositif dynamométrique (17) tels que celui-ci mesure des composantes ($F_{mes1}$, $F_{mes2}$) de la force ($F_{ré}$) agissant entre les véhicules élémentaires, qui sont orientées suivant des directions inclinées d'un angle ($\delta$ ou $\gamma$) par rapport à la verticale et/ou par rapport à l'horizontale,
b) une réalisation du circuit d'évaluation (14) telle que ce circuit

ba) forme, à partir des composantes ($F_{mes1}$, $F_{mes2}$) mentionnées et des angles ($\gamma$ ou $\delta$) décrivant leurs directions, le rapport ($F_{hré}/F_{vré}$) de la composante horizontale réelle ($F_{hré}$) à la composante verticale réelle ($F_{vré}$) de la force ($F_{ré}$) agissant entre les véhicules élémentaires (4, 6), de même que le produit ($F_{hré}$ x $g/F_{vré}$) de ce rapport ($F_{hré}/F_{vré}$) et l'accélération de la pesanteur (g),

bb) compare le produit ($F_{hré}$ x $g/F_{vré}$) mentionné avec la décélération réelle (b) du véhicule et

bc) délivre un signal de commande au dispositif de commande conjuguée (19, 25; 36, 37; 37) s'il constate une inégalité.

10. Train routier selon la revendication 8 ou 9, caractérisé par une réalisation du circuit d'évaluation (14) telle que ce circuit mémorise, lors d'au moins un actionnement des freins, le rapport entre les énergies amenées respectivement à au moins un frein (28, 30) du véhicule élémentaire porteur (4) et au frein (20) du véhicule élémentaire semi-porté (6) et ajuste, au début d'au moins un actionnement consécutif des freins, le signal de commande délivré au dispositif de commande conjuguée (19, 25; 36, 37; 37) de manière que les valeurs des énergies amenées aux freins mentionnés (28, 38, 20) prennent le rapport mémorisé.

Fig.1

EP 0 603 493 B1

Fig.2

EP 0 603 493 B1

Fig.3

Fig. 4